# EUROPEAN PATENT APPLICATION

(11) **EP 3 604 721 A1**
(43) Date of publication of application: **05.02.2020**
(21) Application number: 18776075.6
(22) Date of filing: 21.02.2018
(51) Int. Cl.: E05B 49/00, B60R 25/01, B60R 25/24

(54) **VEHICLE COMMUNICATION SYSTEM**

(30) Priority: 30.03.2017 JP 2017068506
(71) Applicant: Mitsubishi Jidosha Kogyo Kabushiki Kaisha, Tokyo 108-8410 (JP)
(72) Inventor: YASHIRO, Hiroyuki, Tokyo 108-8410 (JP); YAMAGISHI, Takashi, Tokyo 108-8410 (JP)
(74) Representative: Vossius & Partner Patentanwälte Rechtsanwälte mbB
(86) International application number: PCT/JP2018/006181
(87) International publication number: WO 2018/180031

(57) **Abstract**

A vehicular communication system includes a first communication control device capable of outputting a first radio wave to a first area, a first terminal configured to respond to the first radio wave in the first area and output a response radio wave to the first communication control device, a second communication control device capable of outputting a second radio wave with lower power consumption than the first radio wave to a second area larger than the first area, and a second terminal configured to respond to the second radio wave in the second area and output a response radio wave to the second communication control device. The second communication control device can receive the response radio wave from the second terminal. The first communication control device can output the first radio wave when the response radio wave from the second terminal is input to the second communication control device.

## Description

### TECHNICAL FIELD

The present disclosure relates to a vehicular communication system.

### BACKGROUND ART

Patent Document 1 discloses a vehicular communication system including a vehicle, a mobile device, and a mobile terminal. In this vehicular communication system, the vehicle and the mobile device establish wireless communication using radio waves in low frequency (LF) band or ultra-high frequency (UHF) band to transmit and receive various commands and information. Further, since the mobile device functions as a key of the vehicle, for instance, a unique communication method excellent in security is used as the communication method between the vehicle and the mobile device. On the other hand, the vehicle and the mobile terminal establish wireless communication using a general communication standard such as Internet links (e.g., Wi-Fi) and telephone lines (e.g., W-CDMA) in addition to NFC, infrared communication, and Bluetooth (registered trademark) to transmit and receive various commands and information. The mobile terminal includes, for instance, a mobile phone, a smartphone, a personal digital assistant (PDA), a portable music player, and a portable game player.

### Citation List

### Patent Literature

Patent Document 1: JP2013-185376A

### SUMMARY

### Problems to be Solved

In the vehicular communication system disclosed in Patent Document 1, if the vehicle continuously outputs radio waves in LF band or UHF band in order to acquire the mobile device, a large amount of power is consumed, which causes the battery to die. On the other hand, if the vehicle outputs radio waves in LF band or UHF band at intervals in order to save power consumption, acquisition of the mobile device may be delayed.

In view of the above, an object of at least one embodiment of the present invention is to provide a vehicular communication system whereby it is possible to reduce power consumption without reducing responsiveness.

### Solution to the Problems

A vehicular communication system according to at least one embodiment of the present invention comprises: a first communication control device capable of outputting a first radio wave to a first area; a first terminal configured to respond to the first radio wave in the first area and output a response radio wave to the first communication control device; a second communication control device capable of outputting a second radio wave with lower power consumption than the first radio wave to a second area larger than the first area; and a second terminal configured to respond to the second radio wave in the second area and output a response radio wave to the second communication control device, wherein the second communication control device is capable of receiving the response radio wave from the second terminal, and wherein the first communication control device is capable of outputting the first radio wave when the response radio wave from the second terminal is input to the second communication control device.

With the above configuration, the first communication control device is capable of outputting the first radio wave when the response radio wave from the second terminal is input to the second communication control device. Thus, the vehicular communication system can reduce power consumption as much as possible without reducing responsiveness. Further, the first terminal responds to the first radio wave in the first area and outputs the response radio wave to the first communication control device. Thus, the vehicular communication system can maintain security.

In some embodiments, the first radio wave is a low-frequency wave having a frequency of 30 kHz to 300 kHz, and the second radio wave is a radio wave conforming to a near field communication standard for the second terminal. With the above configuration, since the first radio wave is a low-frequency wave having a frequency of 30 kHz to 30 kHz, it is possible to finely adjust the electric field intensity of the first radio wave. Thus, by finely adjusting the electric field intensity of the first radio wave, it is possible to prevent misidentification of the first terminal outside the vehicle (outside vehicle) as being inside the vehicle (inside vehicle). Further, since the second radio wave is a radio wave conforming to a near field communication standard for the second terminal, the vehicular communication system can use a mobile phone device such as a smartphone as the second terminal.

In some embodiments, the near field communication standard for the second terminal is Bluetooth (registered trademark). With the above configuration, the vehicular communication system can reduce power consumption required for outputting the second radio wave from the second communication control device.

In some embodiments, a radius of the second area is 1.5 to 10 times a radius of the first area. With the above configuration, since the radius of the second area is 1.5 to 10 times the radius of the first area, the vehicular communication system can ensure a sufficient time between the input of the response radio wave from the second terminal to the second communication control device and the input of the response radio wave from the first terminal to the first communication control device.

In some embodiments, the first terminal is a dedicated mobile terminal registered to a vehicle. With the above configuration, since the first terminal is a dedicated mobile terminal registered to the vehicle, the vehicular communication system can maintain security.

In some embodiments, the second terminal is a general-purpose mobile terminal registered to a vehicle. With the above configuration, since the second terminal is a general-purpose mobile terminal registered to the vehicle, the vehicular communication system can use a mobile phone device such as a smartphone as the second terminal.

In some embodiments, the vehicular communication system further comprises a control device capable of controlling lighting equipment disposed on a vehicle and connected to the second communication control device, and the control device turns on the lighting equipment when the response radio wave from the second terminal is input to the second communication control device. With the above configuration, since the control device turns on the lighting equipment when the response radio wave from the second terminal is input to the second communication control device, the vehicular communication system is useful for the user to check the position of the vehicle.

In some embodiments, the lighting equipment is a head lamp device disposed at a front portion of the vehicle or a tail lamp device disposed at a back portion of the vehicle. With the above configuration, since the control device turns on the head lamp device or the tail lamp device when the response radio wave is input from the second terminal to the second communication control device, the vehicular communication system is useful for the user to check the position of the vehicle.

In some embodiments, the control device is capable of controlling anti-theft equipment disposed on the vehicle and is connected to the first communication control device, and the control device deactivates the anti-theft equipment when the response radio wave from the first terminal is input to the first communication control device. With the above configuration, since the control device deactivates the anti-theft equipment when the response radio wave from the first terminal is input to the first communication control device, the vehicular communication system can eliminate manual deactivation operation of the anti-theft equipment by the user.

In some embodiments, when the anti-theft device is in a deactivation state and the response radio wave from the first terminal is not input for a certain time, the control device activates the anti-theft equipment. With the above configuration, since the control device activates the anti-theft equipment when the anti-theft equipment is in a deactivation state and the response radio wave from the first terminal is not input for a certain time, the vehicular communication system can eliminate manual activation operation of the anti-theft equipment by the user.

In some embodiments, the anti-theft equipment is a door lock device for locking a door disposed on the vehicle in a closed state. With the above configuration, since the control device unlocks (deactivates) the door lock device when the response radio wave from the first terminal is input to the first communication control device, the vehicular communication system can eliminate manual unlock operation of the door lock device by the user.

In some embodiments, the control device is capable of controlling a door open-close device for opening and closing a door disposed on the vehicle, and the control device operates the door open-close device upon deactivation of the anti-theft equipment and input of a predetermined operation. With the above configuration, since the door open-close device is operated upon deactivation of the anti-theft equipment and input of a predetermine operation, the vehicular communication system can eliminate manual open-close operation of the door by the user.

In some embodiments, the door is a tailgate for opening and closing an opening disposed in a back portion of the vehicle. With the above configuration, since the door open-close device is operated upon deactivation of the anti-theft equipment and input of a predetermine operation, the vehicular communication system can eliminate manual open-close operation of the tailgate by the user.

In some embodiments, the control device causes a hazard lamp device or a room lamp device to blink upon deactivation of the anti-theft equipment. With the above configuration, since the control device causes the hazard lamp device or the room lamp device to blink upon deactivation of the anti-theft equipment, the vehicular communication system can inform the user that the anti-theft equipment is deactivated.

Incidentally, in the vehicular communication system disposed in Patent Document 1, the mobile device functions as a key of the vehicle, and the mobile terminal can execute an application program (hereinafter, referred to as "vehicular program") for operation of the vehicle. However, the mobile device and the mobile terminal do not operate different equipment in accordance with distance from the vehicle. On the other hand, if different equipment can be operated in accordance with distance of the mobile terminal from the vehicle, the vehicle can be set in standby while ensuring anti-theft performance. Thus, it is possible to improve user convenience. In view of the above, an object of at least one embodiment of the present invention is to provide a vehicular communication system which enables different equipment to be operated in accordance with distance of a mobile terminal from a vehicle.

A vehicular communication system according to at least one embodiment of the present invention comprises: a communication control device capable of outputting a radio wave to a third area centered on a vehicle; a mobile terminal capable of responding to the radio wave in the third area and capable of outputting a response radio wave to the communication control device; and a control device connected to the communication control device and capable of controlling third equipment and fourth equipment disposed on the vehicle, wherein when the mobile terminal responds to the radio wave in the third area and outputs a response radio wave to the communication control device, the control operates the third equipment, and wherein when the mobile terminal responds to the radio wave in a fourth area smaller than the third area and outputs a response radio wave to the communication control device, the control device operates the fourth equipment. With the above configuration, the control device operates the third equipment when the mobile terminal responds to the radio wave in the third area and outputs the response radio wave to the communication control device, and, on the other hand, the control device operates the fourth equipment when the mobile terminal responds to the radio wave in the fourth area smaller than the third area and outputs the response radio wave to the communication control device. Accordingly, the vehicular communication system operates the third equipment in the third area centered on the vehicle, and operates the fourth equipment in the fourth area smaller than the third area. Thus, the vehicular communication system can operate different equipment in accordance with distance of the mobile terminal from the vehicle.

In some embodiments, the third equipment is lighting equipment, and the fourth equipment is anti-theft equipment. With the above configuration, the control device operates (turns on) the lighting equipment when the mobile terminal responds to the radio wave in the third area and outputs the response radio wave to the communication control device, and the control device operates (deactivates) the anti-theft equipment when the mobile terminal responds to the radio wave in the fourth area smaller than the third area and outputs the response radio wave to the communication control device. Accordingly, the vehicular communication system operates (turns on) the lighting equipment in the third area centered on the vehicle, and operates (deactivates) the anti-theft equipment in the fourth area smaller than the third area. Thus, the vehicular communication system can operate (turn on) the lighting equipment and operate (deactivate) the anti-theft equipment in accordance with distance of the mobile terminal from the vehicle.

In some embodiments, the lighting equipment is a head lamp device disposed at a front portion of the vehicle or a tail lamp device disposed at a back portion of the vehicle. With the above configuration, the control device turns on the head lamp device or the tail lamp device when the mobile terminal responds to the radio wave in the third area and outputs the response radio wave to the communication control device. Thus, the vehicular communication system is useful for the user to check the position of the vehicle.

In some embodiments, the anti-theft equipment is a door lock device for locking a door disposed on the vehicle in a closed state. With the above configuration, the control device unlocks the door lock device when the mobile terminal responds to the radio wave in the fourth area smaller than the third area and outputs the response radio wave to the communication control device. Thus, the vehicular communication system can eliminate unlock operation of the door lock device by the user.

According to at least one embodiment of the present invention, the vehicular communication system can operate different equipment in accordance with distance of the mobile terminal from the vehicle.

### Advantageous Effects

According to at least one embodiment of the present invention, the vehicular communication system can reduce power consumption without reducing responsiveness.

### BRIEF DESCRIPTION OF DRAWINGS

FIG. 1 is a conceptual diagram showing a first area where a first radio wave can be output and a second area where a second radio wave can be output.
FIG. 2 is a conceptual diagram showing a configuration of a vehicular communication system according to an embodiment of the present invention.
FIG. 3 is a block diagram schematically showing a control configuration of the vehicular communication system shown in FIG. 2.
FIG. 4 is a flow chart schematically showing control details of the vehicular communication system shown in FIG. 2.
FIG. 5 is a conceptual diagram showing a configuration of a vehicular communication system according to an embodiment of the present invention.
FIG. 6 is a conceptual diagram showing a configuration of a vehicular communication system according to an embodiment of the present invention.
FIG. 7 is a block diagram schematically showing a control configuration of the vehicular communication system shown in FIG. 6.
FIG. 8 is a flow chart schematically showing control details of the vehicular communication system shown in FIG. 6.
FIG. 9 is a conceptual diagram showing a third area where a radio wave can be output and a fourth area smaller than the third area.
FIG. 10 is a conceptual diagram showing a configuration of a vehicular communication system according to an embodiment of the present invention.
FIG. 11 is a block diagram schematically showing a control configuration of the vehicular communication system shown in FIG. 10.
FIG. 12 is a flow chart schematically showing control details of the vehicular communication system shown in FIG. 10.

### DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention.

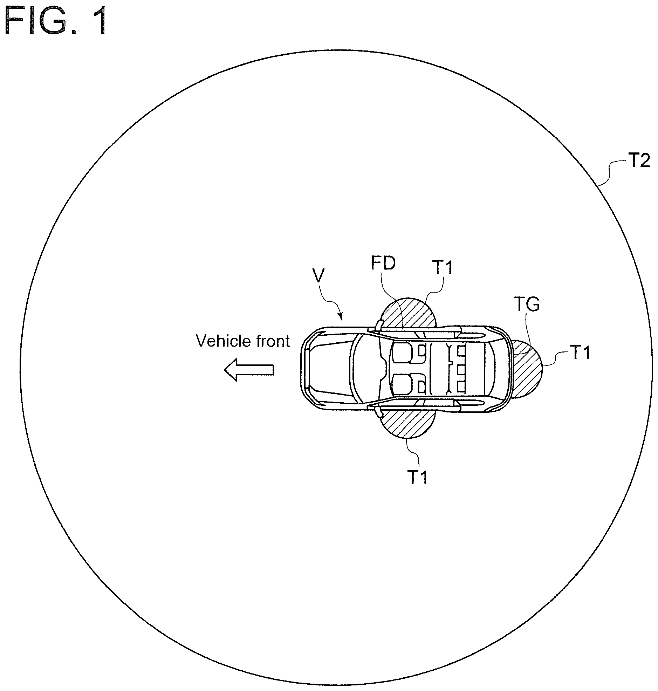

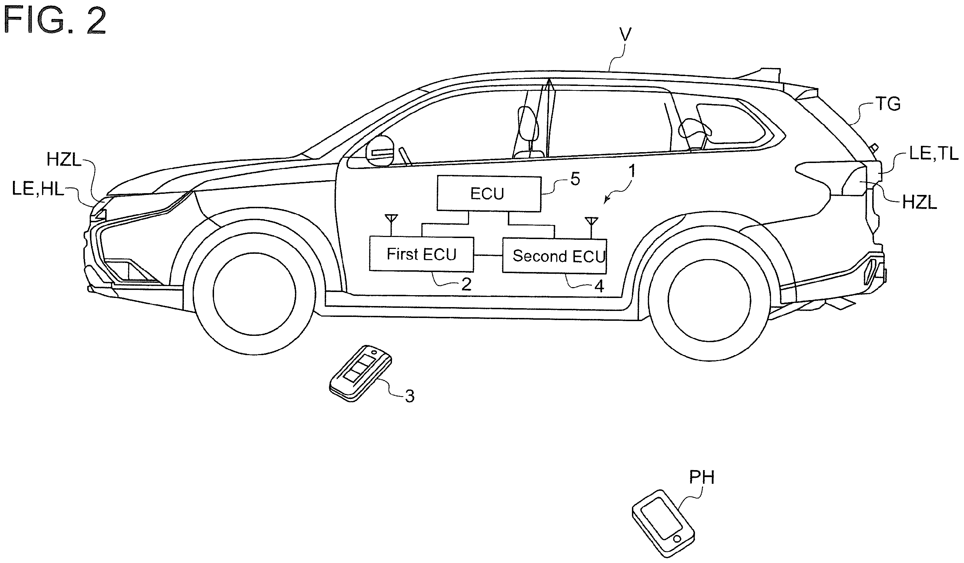

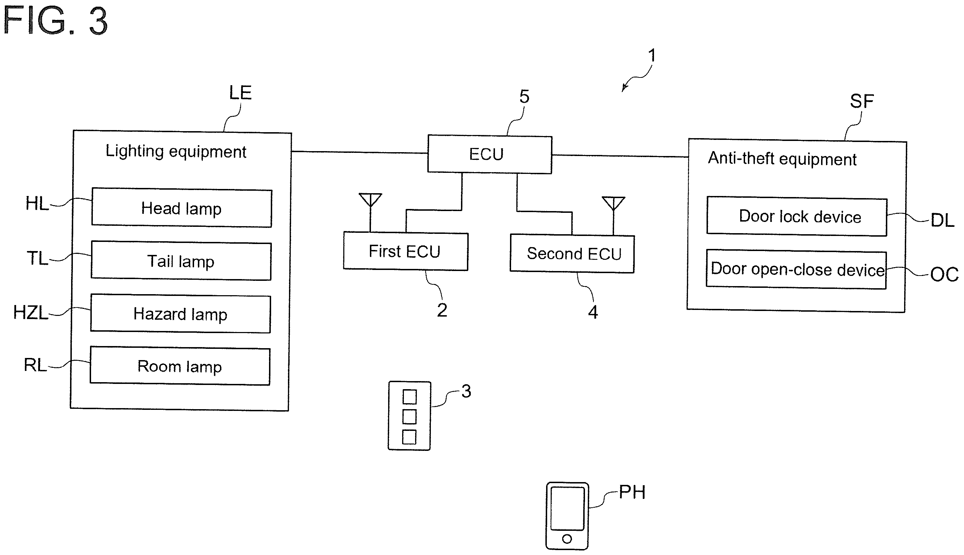

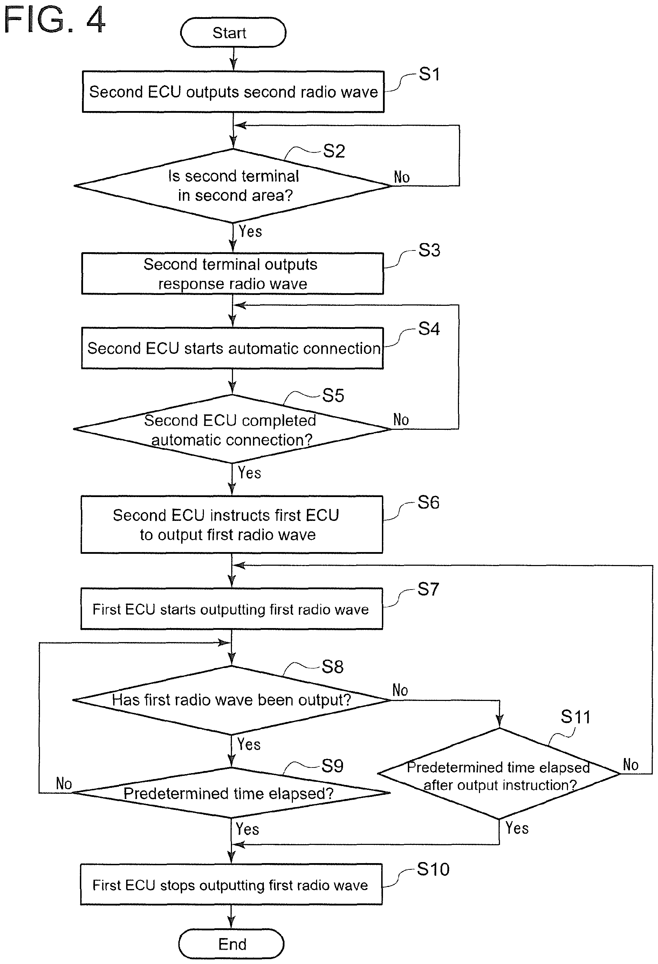

FIG. 1 is a conceptual diagram showing a first area T1 where a first radio wave can be output and a second area T2 where a second radio wave can be output. FIG. 2 is a conceptual diagram showing a configuration of a vehicular communication system 1 according to an embodiment of the present invention. FIG. 3 is a block diagram schematically showing a control configuration of the vehicular communication system 1 shown in FIG. 2. FIG. 4 is a flow chart schematically showing control details of the vehicular communication system 1 shown in FIG. 2.

As shown in FIGs. 2 and 3, the vehicular communication system 1 according to an embodiment of the present invention includes a first communication control device 2 (hereinafter, referred to as "first ECU 2"), a first terminal 3, and a second communication control device 4 (hereinafter, referred to as "second ECU 4").

The first ECU 2 can output a first radio wave to the first area T1 (see FIG. 1). Further, the first ECU 2 can receive a response radio wave from the first terminal 3 in the first area T1. As shown in FIG. 1, the first area T1 is an area centered on door handles (not shown) of a front door FD (front doors on the driver's side and the front passenger's side) and a tailgate TG and an area close to the door handle (for instance, an area arbitrarily set at 70 cm or more and 120 cm or less from the door handle). The first radio wave is a radio wave having any frequency, for instance, a low-frequency wave (LF wave) having a frequency of 30 kHz to 300 kHz.

The first terminal 3 responds to the first radio wave in the first area T1 and outputs a response radio wave to the first ECU 2. Thus, the first ECU 2 can determine whether the first terminal 3 is in the first area T1. The response radio wave from the first terminal 3 is a radio wave having any frequency including an ID code, for instance, a low-frequency wave

(LF wave) having a frequency of 30 kHz to 300 kHz or an ultra-high frequency wave (UHF) having a frequency of 300 MHz to 300 GHz. The first terminal 3 is a dedicated mobile terminal registered to a vehicle V (first ECU 2) and can transmit and receive information to/from the first ECU 2. The first terminal 3 is generally referred to as "Key Fob" and constitutes a part of the vehicle V.

The second ECU 4 can output a second radio wave with lower power consumption than the first radio wave to the second area T2 larger than the first area T1 (see FIG. 1). As shown in FIG. 1, the second area T2 is an area centered on the vehicle V and an area around the vehicle V (for instance, an area arbitrarily set at 10 m or more and 20 m or less from the vehicle V). The second radio wave is a radio wave having any frequency including an ID code, for instance, a radio wave conforming to a near field communication standard for a second terminal, for instance, a radio wave conforming to the Bluetooth (registered trademark) standard.

Further, the second ECU 4 can receive a response radio wave from a second terminal PH registered to the vehicle V in the second area T2. The response radio wave from the second terminal PH is a radio wave having any frequency including an ID code, for instance, a radio wave conforming to a near field communication standard for the second terminal, for instance, a radio wave conforming to the Bluetooth (registered trademark) standard. Thus, the second ECU 4 can determine whether the second terminal PH registered to the vehicle V is in the second area T2.

The second terminal PH is a general-purpose mobile terminal registered to the vehicle V (second ECU 4) and can transmit and receive information to/from the second ECU 4 only in a case where the ID code of the vehicle for the second terminal coincides with the ID code of the second terminal PH. As the second terminal PH, a mobile phone such as a smartphone is used, for instance. Further, the second ECU 4 instructs the first ECU 2 to output the first radio wave upon input of the response radio wave from the second terminal PH capable of transmitting and receiving information. More specifically, the first ECU 2 is able to output the first radio wave when the response radio wave is input from the second terminal PH to the second ECU 4. On the other hand, the first ECU 2 stops outputting the first radio wave until the second ECU 4 instructs the first ECU 2 to output the first radio wave. That is, the first ECU 2 is unable to output the first radio wave until the response radio wave is input from the second terminal PH to the second ECU 4. Further, for instance, the second ECU 4 may instruct the first ECU 2 to output the first radio wave in a case where the ID code included in the response radio wave from the second terminal PH (ID code of the second terminal PH) coincides with the ID code of the vehicle V for the second terminal.

As shown in FIG. 4, in the vehicular communication system 1 according to the above-described embodiment, the second ECU 4 outputs the second radio wave with lower power consumption than the first radio wave to the second area T2 larger than the first area T1 (step S1). Meanwhile, the first ECU 2 stops outputting the first radio wave until the second ECU 4 instructs the first ECU 2 to output the first radio wave. The second area T2 is an area centered on the vehicle V and an area around the vehicle V (for instance, an area arbitrarily set at 10 m or more and 20 m or less from the vehicle V). The second radio wave is a radio wave having any frequency including an ID code, for instance, a radio wave conforming to a near field communication standard for the second terminal PH, for instance, a radio wave conforming to the Bluetooth (registered trademark) standard. Thus, the second ECU 4 can determine whether the second terminal PH registered to the vehicle V is in the second area T2 (step S2).

If a user having the second terminal PH registered to the vehicle V (second ECU 4) (hereinafter, referred to as "registered second terminal PH") enters the second area T2 (step S2: Yes), the registered second terminal PH responds to the second radio wave output from the second ECU 4, and the registered second terminal PH outputs the response radio wave to the second ECU 4 (step S3). Thus, the second ECU 4 starts automatic connection with the registered second terminal PH (step S4). Then, if the second ECU 4 completes automatic connection with the registered second terminal PH (if communication is established) (step S5: Yes), the second ECU 4 instructs the first ECU 2 to output the first radio wave (step S6).

Once the second ECU 4 instructs the first ECU 2 to output the first radio wave, the first ECU 2 starts outputting the first radio wave with higher power consumption than the second radio wave to the first area T1 smaller than the second area T2 (step S7). The first area T1 is an area centered on door handles of the front door FD (front doors on the driver's side and the front passenger's side) and the tailgate TG and an area close to the door handle (for instance, an area arbitrarily set at 90 cm or more and 120 cm or less from the door handle). The first radio wave is a radio wave having any frequency, for instance, a low-frequency wave (LF wave) having a frequency of 30 kHz to 300 kHz. Thereby, the first ECU 2 can determine whether the first terminal 3 capable of responding to the first radio wave is in the first area T1.

Once the first ECU 2 starts outputting the first radio wave, the first ECU 2 confirms whether the first radio wave has been output (step S8). If the first ECU 2 confirms that the first radio wave has been output (step S8: Yes), after the elapse of a predetermined time (e.g., 30 seconds) (step S9: Yes), the first ECU 2 stops outputting the first radio wave (step S10) and ends a series of communication. On the other hand, if the second ECU 4 confirms that the first radio wave has not been output (step S8: No), the second ECU 4 confirms whether a predetermined time (e.g., 30 seconds) elapses after the output instruction (step S11). If the first ECU 2 confirms that the predetermined time does not elapse after the output instruction (step S11: No), the second ECU 4 instructs the first ECU 2 to output the first radio wave (step S7). Conversely, if the first ECU 2 confirms that the predetermined time elapses after the output instruction (step S11: Yes), a series of communication ends.

If a user having the first terminal 3 enters the first area T1 while the first ECU 2 outputs the first radio wave to the first area T1, the first terminal 3 responds to the first radio wave output from the first ECU 2, and the first terminal 3 outputs the response radio wave to the first ECU 2. Thus, the first ECU 2 authenticates the first terminal 3. For instance, it is verified whether the ID code included in the response radio wave (ID code of the first terminal 3) coincides with the ID code of the vehicle V for the first terminal.

With the vehicular communication system 1 according to the above-described embodiment, the second ECU 4 instructs the first ECU 2 to output the first radio wave when the response radio wave from the second terminal PH is input. More specifically, the first ECU 2 is able to output the first radio wave when the response radio wave is input from the second terminal PH to the second ECU 4. On the other hand, the first ECU 2 stops outputting the first radio wave until the second ECU 4 instructs the first ECU 2 to output the first radio wave. That is, the first ECU 2 is unable to output the first radio wave until the response radio wave is input from the second terminal PH to the second ECU 4. Thus, the vehicular communication system 1 can reduce power consumption without reducing responsiveness. Further, for instance, in a case where the ID code included in the response radio wave from the second terminal PH (ID code of the second terminal PH) coincides with the ID code of the vehicle V for the second terminal, when the second ECU 4 instructs the first ECU 2 to output the first radio wave, the first terminal 3 responds to the first radio wave in the first area T1 and outputs the response radio wave to the first ECU 2. Thus, the vehicular communication system 1 can maintain security.

In some embodiments, the first radio wave is a low-frequency wave (LF) having a frequency of 30 kHz to 300 kHz, and the second radio wave is a radio wave conforming to a near field communication standard for the second terminal PH. With the vehicular communication system 1 according to the above-described embodiment, since the first radio wave is a low-frequency wave having a frequency of 30 kHz to 300 kHz, it is possible to finely adjust the electric field intensity of the first radio wave. Thus, by finely adjusting the electric field intensity of the first radio wave, it is possible to prevent misidentification of the first terminal 3 outside the vehicle V (outside vehicle) as being inside the vehicle V (inside vehicle). Further, since the second radio wave is a radio wave conforming to a near field communication standard for the second terminal PH, it is possible to use a mobile phone device such as a smartphone as the second terminal PH.

In some embodiments, the near field communication standard for the second terminal PH is Bluetooth (registered trademark). Bluetooth (registered trademark) is attempted to obtain low power consumption by Bluetooth Low Energy. With the vehicular communication system 1 according to the above-described embodiment, the vehicular communication system 1 can reduce power consumption required for outputting the second radio wave from the second ECU 4.

In some embodiments, the radius of the second area T2 is 1.5 to 10 times the radius of the first area T1. For instance, when the radius of the first area T1 is 1 meter, the radius of the second area T2 is 1.5 to 10 meters. With the vehicular communication system 1 according to the above-described embodiment, since the radius of the second area T2 is 1.5 to 10 times the radius of the first area T1, the vehicular communication system 1 can ensure a sufficient time between the input of the response radio wave from the second terminal PH to the second ECU 4 and the input of the response radio wave from the first terminal 3 to the first ECU 2.

In some embodiments, the first terminal 3 is a dedicated mobile terminal registered to the vehicle V (first ECU 2). The first terminal 3 is generally referred to as "Key Fob" and constitutes a part of the vehicle V. With the vehicular communication system 1 according to the above-described embodiment, since the first terminal 3 is a dedicated mobile terminal registered to the vehicle V (first ECU 2), the vehicular communication system 1 can maintain security.

In some embodiments, the second terminal PH is a general-purpose mobile terminal registered to the vehicle V (second ECU 4). The general-purpose mobile terminal is, for instance, a mobile phone device such as a smartphone. With the vehicular communication system 1 according to the above-described embodiment, since the second terminal PH is a general-purpose mobile terminal registered to the vehicle V (second ECU 4), it is possible to use a mobile phone device such as a smartphone as the second terminal PH.

As shown in FIGs. 2 to 3, in some embodiments, the control device 5 (hereinafter, referred to as "ECU 5") is further included. The ECU 5 can control lighting equipment LE disposed on the vehicle V and is connected to the second ECU 4.

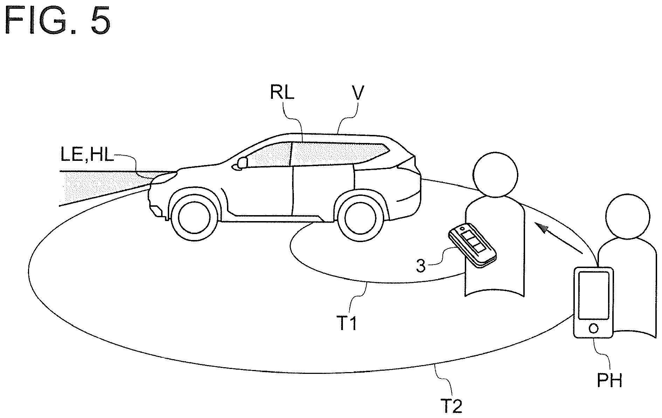

FIG. 5 is a conceptual diagram showing a configuration of a vehicular communication system according to an embodiment of the present invention. As shown in FIG. 5, in some embodiments, the ECU 5 is configured to turn on the lighting equipment LE when the response radio wave from the second terminal PH is input to the second ECU 4. With the vehicular communication system 1 according to the above-described embodiment, since the ECU 5 turns on the lighting equipment LE when the response radio wave from the second terminal PH is input to the second ECU 4, the vehicular communication system 1 is useful for the user to check the position of the vehicle V. Although in the above-described embodiment, the ECU 5 is configured to turn on the lighting equipment LE when the response radio wave from the second terminal PH is input to the second ECU 4, the ECU 5 may be configured to turn on the lighting equipment LE upon input of an instruction radio wave (that instructs the lighting equipment LE to turn on) from the second terminal PH to the second ECU 4 after communication is established between the second ECU 4 and the second terminal PH.

As shown in FIGs. 2, 3, and 5, in some embodiments, the lighting equipment LE is a head lamp device HL disposed at a front portion of the vehicle V or a tail lamp device TL disposed at a back portion of the vehicle V. With the vehicular communication system 1 according to the above-described embodiment, since the head lamp device HL or the tail lamp device TL turns on when the response radio wave is input from the second terminal PH to the second ECU 4, the vehicular communication system 1 is useful for the user to check the position of the vehicle V.

As shown in FIG. 3, in some embodiments, the ECU 5 can control anti-theft equipment SF disposed on the vehicle V and is connected to the first ECU 2. The ECU 5 is configured to deactivate the anti-theft equipment SF when the response radio wave from the first terminal 3 is input to the first ECU 2. With the vehicular communication system 1 according to the above-described embodiment, since the ECU 5 deactivates the anti-theft equipment SF when the response radio wave from the first terminal 3 is input to the first ECU 2, the vehicular communication system 1 can eliminate manual deactivation operation of the anti-theft equipment SF by the user.

As shown in FIG. 3, in some embodiments, the ECU 5 is configured to activate the anti-theft equipment SF when the anti-theft equipment SF is in a deactivation state and the response radio wave from the first terminal 3 is not input for a certain time. With the vehicular communication system 1 according to the above-described embodiment, since the anti-theft equipment SF is activated when the anti-theft equipment SF is in a deactivation state and the response radio wave from the first terminal 3 is not input for a certain time, the vehicular communication system 1 can eliminate manual activation operation of the anti-theft equipment SF by the user.

As shown in FIG. 3, in some embodiments, the anti-theft equipment SF is a door lock device DL which locks a door disposed on the vehicle V in a closed state. With the vehicular communication system 1 according to the above-described embodiment, since the ECU 5 unlocks (deactivates) the door lock device DL when the response radio wave from the first terminal 3 is input to the first ECU 2, the vehicular communication system 1 can eliminate manual unlock operation of the door lock device DL by the user.

In some embodiments, the ECU 5 can control a door open-close device OC for opening and closing the door disposed on the vehicle V and is configured to operate the door open-close device OC upon unlocking of the door lock device DL and input of a predetermined operation. The door open-close device OC is a device for opening and closing a slide door (not shown) which closes a door opening disposed in a side surface of the vehicle V. The door open-close device OC opens or close the slide door upon unlocking of the door lock device DL and a predetermine operation, such as interrupting a sensor (not shown) disposed below the slide door. With the vehicular communication system 1 according to the above-described embodiment, since the door open-close device OC is operated upon unlocking of the door lock device DL and input of a predetermine operation, the vehicular communication system 1 can eliminate manual open-close operation of the door by the user.

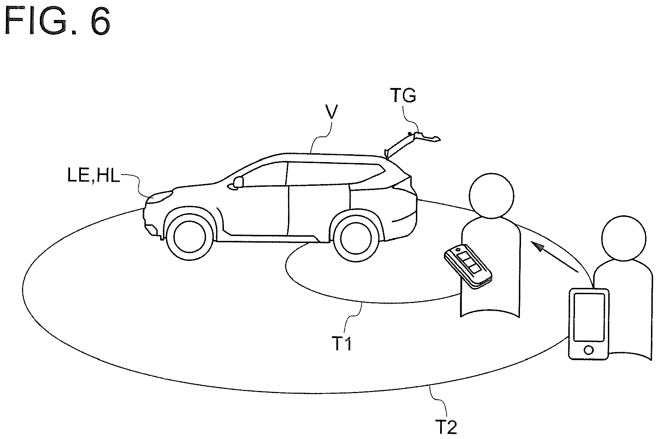

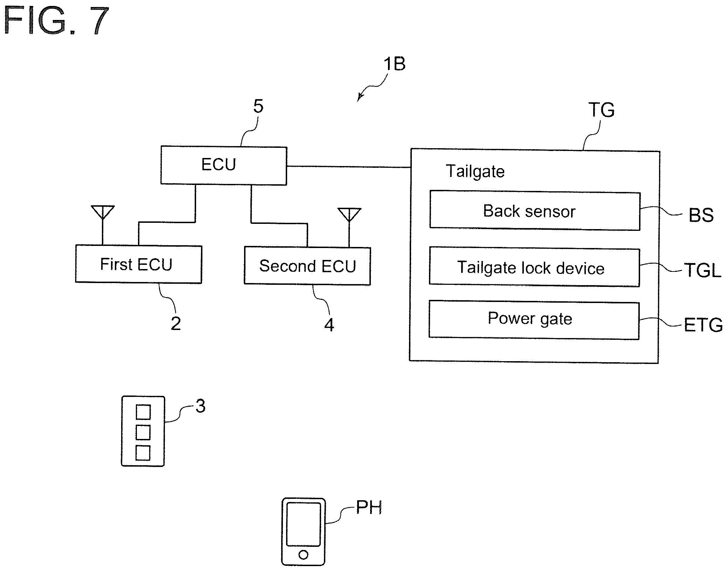

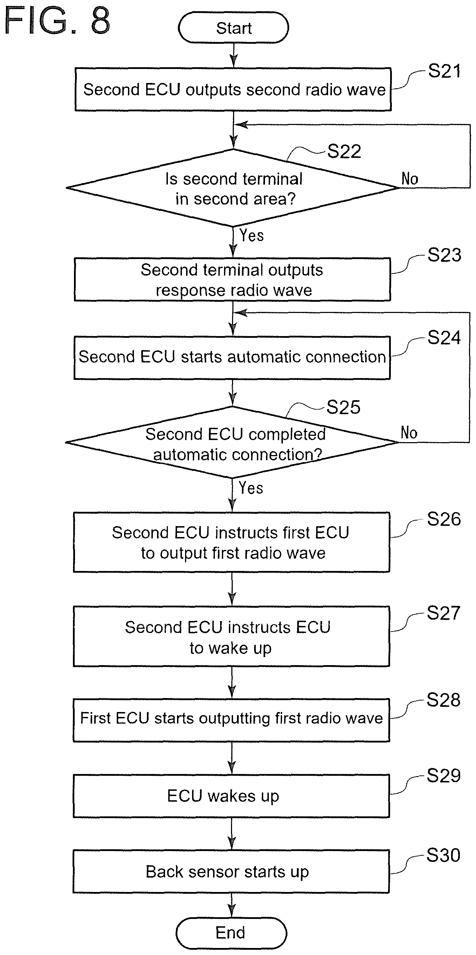

FIG. 6 is a conceptual diagram showing a configuration of a vehicular communication system 1B according to an embodiment of the present invention. FIG. 7 is a block diagram schematically showing a control configuration of the vehicular communication system 1B shown in FIG. 6. FIG. 8 is a block diagram schematically showing control details of the vehicular communication system 1B shown in FIG. 6. As shown in FIGs. 6 and 7, in some embodiments, the door is a tailgate TG which closes an opening disposed in a back portion of the vehicle V. With the vehicular communication system 1B according to the above-described embodiment, since the door open-close device OC (power gate (registered trademark) ETG) is operated upon unlocking of the door lock device DL (tailgate lock device TGL) and input of a predetermine operation, the vehicular communication system 1B can eliminate manual open-close operation of the tailgate TG by the user.

As shown in FIG. 5, in some embodiments, the ECU 5 is configured to cause a hazard lamp device HZL or a room lamp device RL to blink upon deactivation of the anti-theft equipment SF. With the vehicular communication system 1 according to the above-described embodiment, since the ECU 5 causes the hazard lamp device HZL or the room lamp device RL to blink upon deactivation of the anti-theft equipment SF, the vehicular communication system 1 can inform the user that the anti-theft equipment SF is deactivated.

As shown in FIG. 7, in some embodiments, the ECU 5 can control the tailgate lock device TGL for locking, in a closed state, the tailgate TG which closes an opening disposed in a back portion of the vehicle V and a power gate (registered trademark) ETG for opening and closing the tailgate TG, and is connected to a back sensor BS, in addition to the first ECU 2, the first terminal 3, and the second ECU 4. The back sensor BS is to detect an obstacle behind the vehicle and is composed of an ultrasonic sensor, for instance. The obstacle behind the vehicle detected by the back sensor BS includes objects and persons, and the ECU 5 can identify action (motion), for instance motion toward the tailgate TG and then away from the tailgate TG, based on information detected by the back sensor BS.

As shown in FIG. 8, in the above-described embodiment, the second ECU 4 outputs the second radio wave with lower power consumption than the first radio wave to the second area T2 larger than the first area T1 while the first ECU 2 stops outputting the first radio wave until the second ECU 4 instructs to output the first radio wave (step S21). The second area T2 is an area centered on the vehicle V and an area around the vehicle V (for instance, an area arbitrarily set at 10 m or more and 20 m or less from the vehicle V). The second radio wave is a radio wave having any frequency including an ID code, for instance, a radio wave conforming to a near field communication standard for the second terminal PH, for instance, a radio wave conforming to the Bluetooth (registered trademark) standard. Thus, the second ECU 4 can determine whether the second terminal PH registered to the vehicle V is in the second area T2 (step S22).

If a user having the second terminal PH registered to the vehicle V (second ECU 4) enters the second area T2 (step S22: Yes), the registered second terminal PH responds to the second radio wave output from the second ECU 4, and the registered second terminal PH outputs the response radio wave to the second ECU 4 (step S23). Thus, the second ECU 4 starts automatic connection with the registered second terminal PH (step S24). Then, if the second ECU 4 completes automatic connection with the registered second terminal PH (if communication is established) (step S25: Yes), the second ECU 4 instructs the first ECU 2 to output the first radio wave and further instructs the ECU 5 to wake up (start up) (steps S26, S27).

Once the second ECU 4 instructs the first ECU 2 to output the first radio wave, the first ECU 2 starts outputting the first radio wave with higher power consumption than the second radio wave to the first area T1 smaller than the second area T2 (step S28). The first area T1 is an area centered on door handles of the front door FD (front doors on the driver's side and the front passenger's side) and the tailgate TG and an area close to the door handle (for instance, an area arbitrarily set at 90 cm or more and 120 cm or less from the door handle). The first radio wave is a radio wave having any frequency, for instance, a low-frequency wave (LF wave) having a frequency of 30 kHz to 300 kHz. Thereby, the first ECU 2 can determine whether the first terminal 3 capable of responding to the first radio wave is in the first area T1.

Once the second ECU 4 instructs the ECU 5 to wake up, the ECU 5 wakes up (starts up) (step S29), and the back sensor BS wakes up (starts up) (step S30). Thus, it is possible to detect an obstacle behind the vehicle (behind the tailgate) by the back sensor BS.

If a user having the first terminal 3 enters the first area T1 while the first ECU 2 outputs the first radio wave to the first area T1, the first terminal 3 responds to the first radio wave output from the first ECU 2, and the first terminal 3 outputs the response radio wave to the first ECU 2. Thus, the first ECU 2 authenticates the first terminal 3. For instance, it is verified whether the ID code included in the response radio wave (ID code of the first terminal 3) coincides with the ID code of the vehicle V for the first terminal.

Once the first ECU 2 authenticates the first terminal 3, the ECU 5 unlocks (deactivates) the tailgate lock device TGL which locks the tailgate TG in a closed state. Thus, the ECU 5 can open and close the tailgate TG by the power gate (registered trademark) ETG.

Further, in a state where the first ECU 2 authenticates the first terminal 3, when the ECU 5 identifies a predetermined action of the user (person), for instance motion toward the tailgate TG and then away from the tailgate TG, based on information from the back sensor BS, the ECU 5 opens the tailgate TG.

Further, in a state where the tailgate TG is open and the first ECU 2 authenticates the first terminal 3, when the ECU 5 identifies a predetermined action of the user (person), for instance motion toward the tailgate TG and then away from the tailgate TG, based on information from the back sensor BS, the ECU 5 closes the tailgate TG.

According to the above-described embodiment, the second ECU 4 instructs the first ECU 2 to output the first radio wave when the response radio wave from the second terminal PH is input, while the first ECU 2 stops outputting the first radio wave until the second ECU 4 instructs the first ECU 2 to output the first radio wave. Thus, the vehicular communication system 1B can reduce power consumption without reducing responsiveness.

Further, the second ECU 4 instructs the ECU 1 to wake up (start up) when the response radio wave from the second terminal PH is input, while the ECU 5 is in standby (stops) until the second ECU 4 instructs the ECU 5 to wake up. Thus, since the ECU 5 stops the back sensor BS until the second ECU 4 instructs the ECU 5 to wake up (start up), the vehicular communication system 1B can reduce power consumption.

Further, once a user having the first terminal 3 enters the first area T1, the first ECU 2 authenticates the first terminal 3, and the ECU 5 unlocks (deactivates) the tailgate lock device TGL which locks the tailgate TG in a closed state. Thus, it is possible to prevent reduction in anti-theft performance.

Further, in a state where the first ECU 2 authenticates the first terminal 3, when the ECU 5 identifies a predetermined action of the user (person), for instance motion toward the tailgate TG and then away from the tailgate TG, based on information from the back sensor BS, the ECU 5 opens the tailgate TG. Thus, the vehicular communication system 1B can eliminate manual open-close operation of the tailgate TG by the user. In addition, since a back sensor for detecting an obstacle during vehicle backward movement may also be used as the back sensor BS, it is unnecessary to dispose an additional back sensor, and it is possible to prevent an increase in cost.

Further, a commonly known tailgate cannot accurately reflect the intention of the user since the power gate (registered trademark) is operated by detection of the back sensor disposed on the bumper or the tailgate. By contrast, in the above-described embodiment, when the first terminal 3 enters the first area T1 and the ECU 5 identifies a predetermined action (motion) of the user based on information from the back sensor BS, the power gate (registered trademark) ETG is operated. Thus, it is possible to accurately reflect the intention of the user. Therefore, it is also possible to avoid danger due to the opening and closing of the tailgate TG.

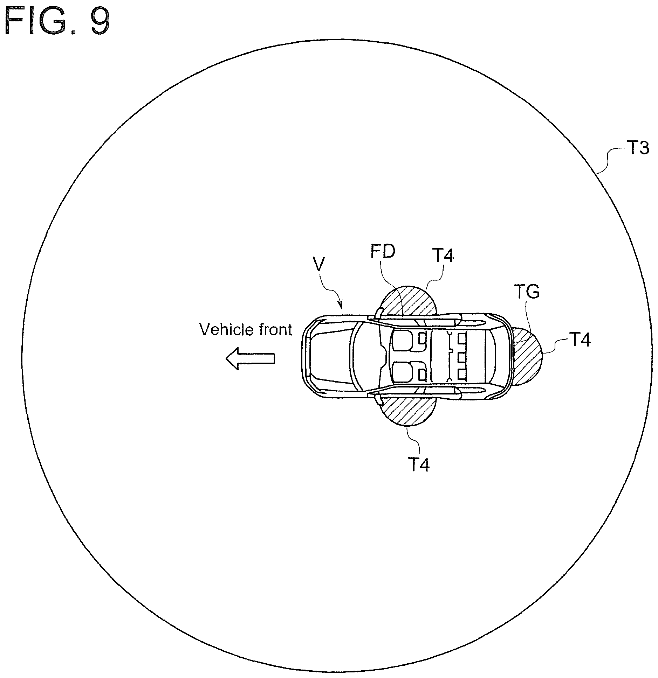

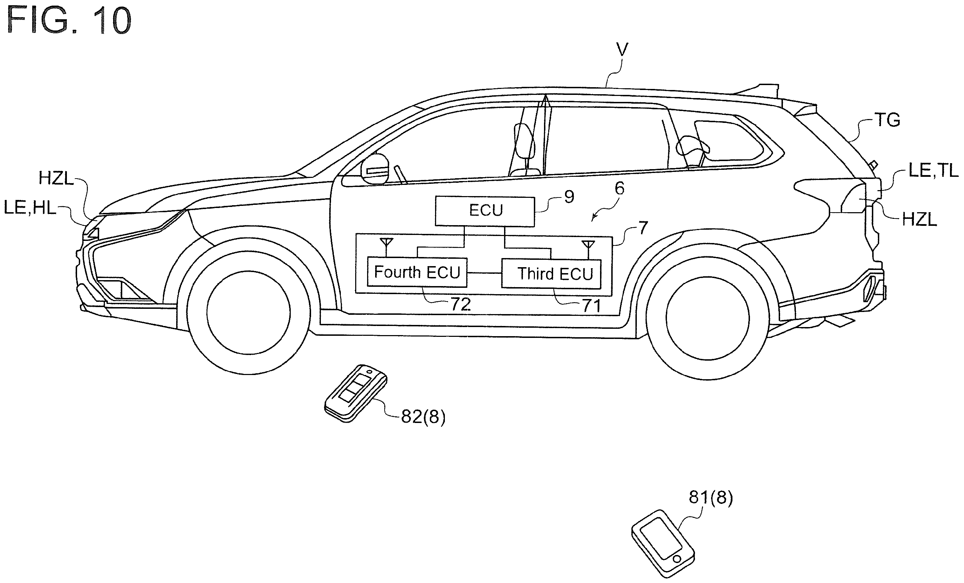

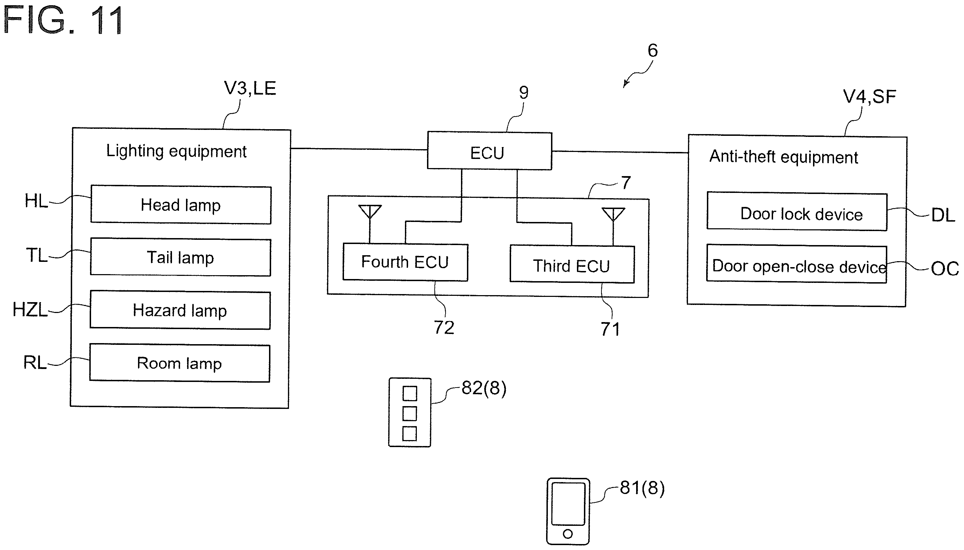

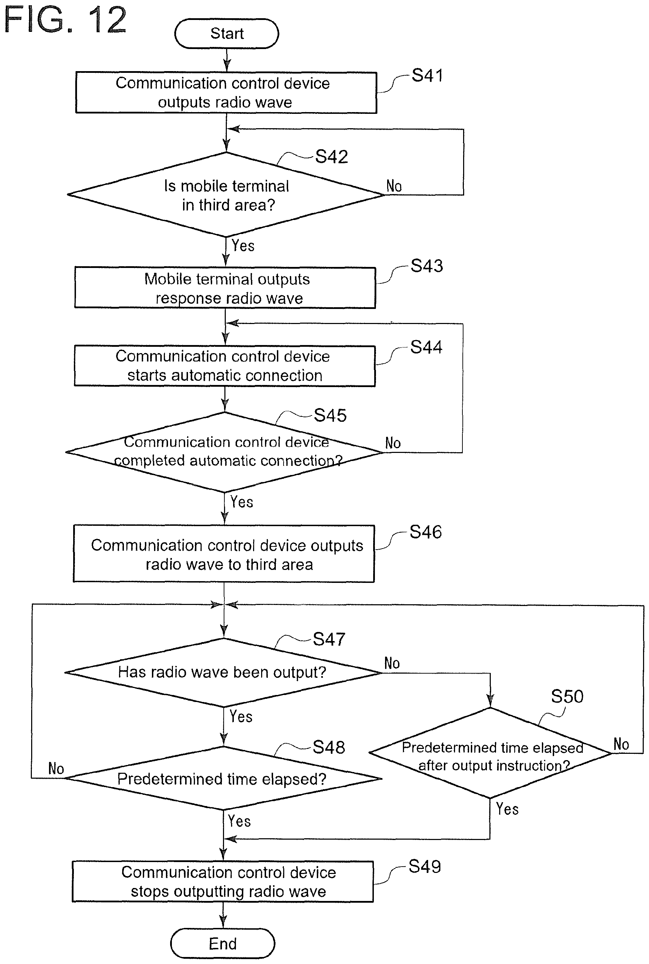

FIG. 9 is a conceptual diagram showing a third area T3 where a radio wave can be output and a fourth area T4 smaller than the third area T3. FIG. 10 is a conceptual diagram showing a configuration of a vehicular communication system 6 according to an embodiment of the present invention. FIG. 11 is a block diagram schematically showing a control configuration of the vehicular communication system 6 shown in FIG. 10. FIG. 12 is a flow chart schematically showing control details of the vehicular communication system 6 shown in FIG. 10.

As shown in FIGs. 10 and 11, the vehicular communication system 6 according to an embodiment of the present invention includes a communication control device 7, a mobile terminal 8, and a control device 9.

The communication control device 7 can output a radio wave to the third area T3 (see FIG. 9) centered on the vehicle V. The mobile terminal 8 can respond to the radio wave in the third area T3 and can output a response radio wave to the communication control device 7. The control device 9 (hereinafter, referred to as "ECU 9") is connected to the communication control device 7 and can control third equipment and fourth equipment disposed on the vehicle V. Further, the ECU 9 operates the third equipment V3 when the mobile terminal 8 responds to the radio wave in the third area T3 and outputs the response radio wave to the communication control device 7, and the ECU 9 operates the fourth equipment V4 when the mobile terminal 8 responds to the radio wave in the fourth area T4 (see FIG. 9) smaller than the third area T3 and outputs the response radio wave to the communication control device 7.

The communication control device 7 includes, for instance, a third communication control device 71 (hereinafter, referred to as "third ECU 71") and a fourth communication control device 72 (hereinafter, referred to as "fourth ECU 72"), and the mobile terminal 8 includes a third terminal 81 and a fourth terminal 82.

The third ECU 71 can output a radio wave (third radio wave) to the third area T3. The third area T3 is an area centered on the third ECU 71 and an area around the vehicle V (for instance, an area 10 m or more and 20 m or less from the vehicle V). The radio wave (third radio wave) is a radio wave having any frequency including an ID code, for instance, a radio wave conforming to a near field communication standard for the third terminal, for instance, a radio wave conforming to the Bluetooth (registered trademark) standard.

Further, the third ECU 71 can receive a response radio wave from the third terminal 81 registered to the vehicle V in the third area T3. The response radio wave is a radio wave having any frequency including an ID code, for instance, a radio wave conforming to a near field communication standard for the third terminal, for instance, a radio wave conforming to the Bluetooth (registered trademark) standard. Thus, the third ECU 71 can determine whether the third terminal 81 registered to the vehicle V is in the third area T3.

The third terminal 81 is a general-purpose mobile terminal registered to the vehicle V (third ECU 71) and can transmit and receive information to/from the third ECU 71 only in a case where the ID code of the vehicle V for the third terminal coincides with the ID code of the third terminal 81. As the third terminal 81, a mobile phone such as a smartphone is used, for instance. Further, the third ECU 71 instructs the fourth ECU 72 to output a radio wave (fourth radio wave) when the response radio wave from the third terminal 81 is input.

The fourth ECU 72 can output a radio wave (fourth radio wave) to the fourth area T4 smaller than the third area T3. Further, the fourth ECU 72 can receive a response radio wave from the fourth terminal 82 capable of responding the radio wave (fourth radio wave) in the fourth area T4. The fourth area T4 is an area centered on door handles of the front door (front doors on the driver's side and the front passenger's side) and the tailgate TG and an area close to the door handle (for instance, an area arbitrarily set at 90 cm or more and 120 cm or less from the door handle). The radio wave (fourth radio wave) is a radio wave having any frequency, for instance, a low-frequency wave (LF wave) having a frequency of 30 kHz to 300 kHz.

The fourth terminal 82 responds to the radio wave (fourth radio wave) in the fourth area T4 and outputs a response radio wave to the fourth ECU 72. Thus, the fourth ECU 72 can determine whether the fourth terminal 82 is in the first area T1. The response radio wave from the fourth terminal 82 is a radio wave including an ID code, for instance, a low-frequency wave (LF wave) having a frequency of 30 kHz to 300 kHz or an ultra-high frequency wave (UHF) having a frequency of 300 MHz to 30 GHz. The fourth terminal 82 is a dedicated mobile terminal 8 registered to the vehicle V (fourth ECU 72) and can transmit and receive information to/from the fourth ECU 72. The fourth terminal 82 is generally referred to as "Key Fob" and constitutes a part of the vehicle V.

As shown in FIG. 12, in the vehicular communication system 6 according to the above-described embodiment, the communication control device 7 outputs the radio wave to the third area T3 (step S41). The third area T3 is an area centered on the third ECU 71 and an area around the vehicle V (for instance, an area arbitrarily set at 10 m or more and 20 m or less from the vehicle V). The radio wave output from the communication control device 7 to the third area T3 is a radio wave having any frequency including an ID code and is output from the third ECU 71, for instance. The radio wave (third radio wave) output from the third ECU 71 is, for instance, a radio wave conforming to the Bluetooth (registered trademark) standard. Thus, the communication control device 7 (third ECU 71) can determine whether the mobile terminal 8 (third terminal 81) registered to the vehicle is in the third area T3 (step S42).

If a user having the mobile terminal 8 (third terminal 81) registered to the vehicle V (third ECU 71) (hereinafter, referred to as "registered mobile terminal 8 (third terminal 81)") enters the third area T3 (step S42: Yes), the registered mobile terminal 8 responds to the radio wave (third radio wave) output from the third ECU 71, and the registered mobile terminal 8 (third terminal 81) outputs the response radio wave to the communication control device 7 (third ECU 71) (step S43). Thus, the communication control device 7 (third ECU 71) starts automatic connection with the registered mobile terminal 8 (third terminal 81) (step S44). Then, if the communication control device 7 (third ECU 71) completes automatic connection with the registered mobile terminal 8 (third terminal 81) (step S45: Yes), the communication control device 7 outputs the radio wave to the fourth area T4 smaller than the third area T3 (step S46).

The fourth area T4 is an area centered on door handles of the front door (front doors on the driver's side and the front passenger's side) and the tailgate TG and an area close to the door handle (for instance, an area arbitrarily set at 90 cm or more and 120 cm or less from the door handle).

The radio wave output from the communication control device 7 to the fourth area T4 is a radio wave having any frequency and is output from the fourth ECU 72, for instance. The radio wave (fourth radio wave) output from the fourth ECU 72 is, for instance, a low-frequency wave (LF wave) having a frequency of 30 kHz to 300 kHz. Thereby, the communication control device 7 (fourth ECU 72) can determine whether the mobile terminal 8 (fourth terminal 82) capable of responding to the radio wave (fourth radio wave) is in the fourth area T4.

Once the communication control device 7 starts outputting the radio wave to the fourth area T4, the communication control device 7 (fourth ECU 72) confirms whether the radio wave has been output to the fourth area T4 (step S47). If the communication control device 7 (fourth ECU 72) confirms that the radio wave has been output to the fourth area T4 (step S47: Yes), after the elapse of a predetermined time (e.g., 30 seconds) (step S48: Yes), the communication control device 7 stops outputting the radio wave to the fourth area T4 (step S49) and ends a series of communication. On the other hand, if the communication control device 7 (fourth ECU 72) confirms that the radio wave has not been output to the fourth area T4 (step S47: No), it is confirmed whether a predetermined time (e.g., 30 seconds) elapses after the instruction to output the radio wave to the fourth area T4 (step S50). If the communication control device 7 (fourth ECU 72) confirms that the predetermined time does not elapse after the instruction to output the radio wave to the fourth area T4, the communication control device 7 issues an instruction to output the radio wave to the fourth area T4 (step S47). Conversely, if the communication control device 7 (fourth ECU 72) confirms that the predetermined time elapses after the instruction to output the radio wave to the fourth area T4 (step S50: Yes), the communication control device 7 stops outputting the radio wave to the fourth area T4 (step S49) and ends a series of communication.

If a user having the mobile terminal 8 (fourth terminal 82) enters the fourth area T4 while the communication control device 7 (fourth ECU 4) outputs the radio wave (fourth radio wave) to the fourth area T4, the mobile terminal 8 (fourth terminal 82) responds to the radio wave (fourth radio wave) output from the communication control device 7 (fourth ECU 72), and the mobile terminal 8 (fourth terminal 82) outputs the response radio wave to the communication control device 7 (fourth ECU 72). Thus, the communication control device 7 (fourth ECU 72) authenticates the mobile terminal 8 (fourth terminal 82). For instance, it is verified whether the ID code included in the response radio wave (ID code of the registered mobile terminal 8 (forth terminal 82)) coincides with the ID code of the vehicle V for the mobile terminal (ID code for the fourth terminal).

With the vehicular communication system 6 according to the above-described embodiment, the ECU 9 operates the third equipment V3 when the mobile terminal 8 responds to the radio wave in the third area T3 and outputs the response output to the communication control device 7, and the ECU 9 operates the fourth equipment V4 when the mobile terminal 8 responds to the radio wave in the fourth area T4 centered on the vehicle V and smaller than the third area T3 and outputs the response radio wave to the communication control device 7. Accordingly, the vehicular communication system 6 operates the third equipment in the third area T3 centered on the vehicle V, and operates the fourth equipment in the fourth area T4 centered on the vehicle V and smaller than the third area T3. Thus, the vehicular communication system 6 can operate different equipment in accordance with distance of the mobile terminal 8 from the vehicle V.

As shown in FIGs. 10 and 11, in some embodiments, the third equipment V3 is the lighting equipment LE, and the fourth equipment is the anti-theft equipment. With the vehicular communication system 6 according to the above-described embodiment, the ECU 9 operates (turns on) the lighting equipment LE when the mobile terminal 8 responds to the radio wave in the third area T3 and outputs the response output to the communication control device 7, and the ECU 9 operates (deactivates) the anti-theft equipment SF when the mobile terminal 8 responds to the radio wave in the fourth area T4 centered on the vehicle V and smaller than the third area T3 and outputs the response radio wave to the communication control device 7. Accordingly, the vehicular communication system 6 operates (turns on) the lighting equipment LE in the third area T3 centered on the vehicle V, and operates (deactivates) the anti-theft equipment SF in the fourth area T4 smaller than the third area T3. Thus, the vehicular communication system 6 can operate (turn on) the lighting equipment LE and operate (deactivate) the anti-theft equipment SF in accordance with distance of the mobile terminal 8 from the vehicle V.

As shown in FIGs. 10 and 11, in some embodiments, the lighting equipment LE is a head lamp device HL disposed at a front portion of the vehicle V or a tail lamp device TL disposed at a back portion of the vehicle V. With the vehicular communication system 6 according to the above-described embodiment, the ECU 9 turns on the head lamp device HL or the tail lamp device TL when the mobile terminal 8 responds to the radio wave in the third area T3 and outputs the response radio wave to the communication control device 7. Thus, the vehicular communication system 6 is useful for the user to check the position of the vehicle V.

As shown in FIG. 11, in some embodiments, the anti-theft equipment SF is a door lock device DL which locks a door disposed on the vehicle V in a closed state. With the vehicular communication system 6 according to the above-described embodiment, the ECU 9 unlocks the door lock device DL when the mobile terminal 8 responds to the radio wave in the fourth area T4 smaller than the third area T3 and outputs the response radio wave to the communication control device 7. Thus, the vehicular communication system 6 can eliminate unlock operation of the door lock device DL by the user.

The present invention is not limited to the embodiments described above, but includes modifications to the embodiments described above, and embodiments composed of combinations of those embodiments.

### Reference Signs List

- 1: Vehicular communication system
- 2: First communication control device (First ECU)
- 3: First terminal
- 4: Second communication control device (Second ECU)
- 5: Control device (ECU)
- PH: Second terminal
- V: Vehicle
- LE: Lighting equipment
- HL: Head lamp device
- TL: Tail lamp device
- HZL: Hazard lamp device
- RL: Room lamp device
- SF: Anti-theft equipment
- DL: Door lock device
- OC: Door open-close device
- TG: Tailgate
- TGL: Tailgate lock device
- ETG: Power gate (registered trademark)
- T1: First area
- T2: Second area
- 6: Vehicular communication system
- 7: Communication control device
- 71: Third communication control device (Third ECU)
- 72: Fourth communication control device (Fourth ECU)
- 8: Mobile terminal
- 81: Third terminal
- 82: Fourth terminal
- 9: Control device (ECU)
- V: Vehicle
- LE: Lighting equipment
- HL: Head lamp device
- TL: Tail lamp device
- SF: Anti-theft equipment
- DL: Door lock device
- T3: Third area
- T4: Fourth area

## Claims

1. A vehicular communication system comprising:
a first communication control device capable of outputting a first radio wave to a first area;
a first terminal configured to respond to the first radio wave in the first area and output a response radio wave to the first communication control device;
a second communication control device capable of outputting a second radio wave with lower power consumption than the first radio wave to a second area larger than the first area; and
a second terminal configured to respond to the second radio wave in the second area and output a response radio wave to the second communication control device,
wherein the second communication control device is capable of receiving the response radio wave from the second terminal, and
wherein the first communication control device is capable of outputting the first radio wave when the response radio wave from the second terminal is input to the second communication control device.

2. The vehicular communication system according to claim 1,
wherein the first radio wave is a low-frequency wave having a frequency of 30 kHz to 300 kHz, and
wherein the second radio wave is a radio wave conforming to a near field communication standard for the second terminal.

3. The vehicular communication system according to claim 2,
wherein the near field communication standard for the second terminal is Bluetooth (registered trademark).

4. The vehicular communication system according to any one of claims 1 to 3,
wherein a radius of the second area is 1.5 to 10 times a radius of the first area.

5. The vehicular communication system according to any one of claims 1 to 4,
wherein the first terminal is a dedicated mobile terminal registered to a vehicle.

6. The vehicular communication system according to any one of claims 1 to 5,
wherein the second terminal is a general-purpose mobile terminal registered to a vehicle.

7. The vehicular communication system according to any one of claims 1 to 6, further comprising a control device capable of controlling lighting equipment disposed on a vehicle, the control device being connected to the second communication control device,
wherein the control device turns on the lighting equipment when the response radio wave from the second terminal is input to the second communication control device.

8. The vehicular communication system according to claim 7,
wherein the lighting equipment is a head lamp device disposed at a front portion of the vehicle or a tail lamp device disposed at a back portion of the vehicle.

9. The vehicular communication system according to claim 7 or 8,
wherein the control device is capable of controlling anti-theft equipment disposed on the vehicle and is connected to the first communication control device, and
wherein the control device deactivates the anti-theft equipment when the response radio wave from the first terminal is input to the first communication control device.

10. The vehicular communication system according to claim 9,
wherein when the anti-theft device is in a deactivation state and the response radio wave from the first terminal is not input for a certain time, the control device activates the anti-theft equipment.

11. The vehicular communication system according to claim 9 or 10,
wherein the anti-theft equipment is a door lock device for locking a door disposed on the vehicle in a closed state.

12. The vehicular communication system according to claim 9,
wherein the control device is capable of controlling a door open-close device for opening and closing a door disposed on the vehicle, and the control device operates the door open-close device upon deactivation of the anti-theft equipment and input of a predetermined operation.

13. The vehicular communication system according to claim 12,
wherein the door is a tailgate for opening and closing an opening disposed in a back portion of the vehicle.

14. The vehicular communication system according to any one of claims 9 to 13,
wherein the control device causes a hazard lamp device or a room lamp device to blink upon deactivation of the anti-theft equipment.

15. A vehicular communication system comprising:
a communication control device capable of outputting a radio wave to a third area centered on a vehicle;
a mobile terminal capable of responding to the radio wave in the third area and capable of outputting a response radio wave to the communication control device; and
a control device connected to the communication control device and capable of controlling third equipment and fourth equipment disposed on the vehicle,
wherein when the mobile terminal responds to the radio wave in the third area and outputs a response radio wave to the communication control device, the control operates the third equipment, and
wherein when the mobile terminal responds to the radio wave in a fourth area smaller than the third area and outputs a response radio wave to the communication control device, the control device operates the fourth equipment.

16. The vehicular communication system according to claim 15,
wherein the third equipment is lighting equipment, and
wherein the fourth equipment is anti-theft equipment.

17. The vehicular communication system according to claim 16,
wherein the lighting equipment is a head lamp device disposed at a front portion of the vehicle or a tail lamp device disposed at a back portion of the vehicle.

18. The vehicular communication system according to claim 16 or 17,
wherein the anti-theft equipment is a door lock device for locking a door disposed on the vehicle in a closed state.

## Amended claims

### Amended claims under Art. 19.1 PCT

**1.** A vehicular communication system comprising:
a first communication control device capable of outputting a first radio wave to a first area;
a first terminal configured to respond to the first radio wave in the first area and output a response radio wave to the first communication control device;
a second communication control device capable of outputting a second radio wave with lower power consumption than the first radio wave to a second area larger than the first area; and
a second terminal configured to respond to the second radio wave in the second area and output a response radio wave to the second communication control device,
wherein the second communication control device is capable of receiving the response radio wave from the second terminal,
wherein the first communication control device is capable of outputting the first radio wave when the response radio wave from the second terminal is input to the second communication control device,
wherein the vehicular communication system further comprises a control device capable of controlling lighting equipment disposed on a vehicle, the control device being connected to the second communication control device, and
wherein the control device turns on the lighting equipment when the response radio wave from the second terminal is input to the second communication control device.

**2.** The vehicular communication system according to claim 1,
wherein the first radio wave is a low-frequency wave having a frequency of 30 kHz to 300 kHz, and
wherein the second radio wave is a radio wave conforming to a near field communication standard for the second terminal.

**3.** The vehicular communication system according to claim 2,
wherein the near field communication standard for the second terminal is Bluetooth (registered trademark).

**4.** The vehicular communication system according to any one of claims 1 to 3,
wherein a radius of the second area is 1.5 to 10 times a radius of the first area.

**5.** The vehicular communication system according to any one of claims 1 to 4,
wherein the first terminal is a dedicated mobile terminal registered to the vehicle.

**6.** The vehicular communication system according to any one of claims 1 to 5,
wherein the second terminal is a general-purpose mobile terminal registered to the vehicle.

**8.** The vehicular communication system according to claim 1,
wherein the lighting equipment is a head lamp device disposed at a front portion of the vehicle or a tail lamp device disposed at a back portion of the vehicle.

**9.** The vehicular communication system according to claim 8,
wherein the control device is capable of controlling anti-theft equipment disposed on the vehicle and is connected to the first communication control device, and
wherein the control device deactivates the anti-theft equipment when the response radio wave from the first terminal is input to the first communication control device.

**10.** The vehicular communication system according to claim 9,
wherein when the anti-theft device is in a deactivation state and the response radio wave from the first terminal is not input for a certain time, the control device activates the anti-theft equipment.

**11.** The vehicular communication system according to claim 9 or 10,
wherein the anti-theft equipment is a door lock device for locking a door disposed on the vehicle in a closed state.

**12.** The vehicular communication system according to claim 9,
wherein the control device is capable of controlling a door open-close device for opening and closing a door disposed on the vehicle, and the control device operates the door open-close device upon deactivation of the anti-theft equipment and input of a predetermined operation.

**13.** The vehicular communication system according to claim 12,
wherein the door is a tailgate for opening and closing an opening disposed in a back portion of the vehicle.

**14.** The vehicular communication system according to any one of claims 9 to 13,
wherein the control device causes a hazard lamp device or a room lamp device to blink upon deactivation of the anti-theft equipment.

**15.** A vehicular communication system comprising:
a communication control device capable of outputting a radio wave to a third area centered on a vehicle;
a mobile terminal capable of responding to the radio wave in the third area and capable of outputting a response radio wave to the communication control device; and
a control device connected to the communication control device and capable of controlling third equipment and fourth equipment disposed on the vehicle,
wherein when the mobile terminal responds to the radio wave in the third area and outputs a response radio wave to the communication control device, the control operates the third equipment, and
wherein when the mobile terminal responds to the radio wave in a fourth area smaller than the third area and outputs a response radio wave to the communication control device, the control device operates the fourth equipment.

**16.** The vehicular communication system according to claim 15,
wherein the third equipment is lighting equipment, and
wherein the fourth equipment is anti-theft equipment.

**17.** The vehicular communication system according to claim 16,
wherein the lighting equipment is a head lamp device disposed at a front portion of the vehicle or a tail lamp device disposed at a back portion of the vehicle.

**18.** The vehicular communication system according to claim 16 or 17,
wherein the anti-theft equipment is a door lock device for locking a door disposed on the vehicle in a closed state.
